Europäisches Patentamt

(19) European Patent Office

Office européen des brevets

(11) EP 0 666 778 B1

## (12) EUROPÄISCHE PATENTSCHRIFT

(45) Veröffentlichungstag und Bekanntmachung des Hinweises auf die Patenterteilung:
**12.03.1997 Patentblatt 1997/11**

(21) Anmeldenummer: **93924551.0**

(22) Anmeldetag: **29.10.1993**

(51) Int. Cl.$^6$: **B05D 1/12**, C09D 5/03, B05B 7/16

(86) Internationale Anmeldenummer:
**PCT/EP93/03025**

(87) Internationale Veröffentlichungsnummer:
**WO 94/11120 (26.05.1994 Gazette 1994/12)**

(54) **VERFAHREN ZUR HERSTELLUNG EINER PULVERBESCHICHTUNG, VORRICHTUNG ZUR DURCHFÜHRUNG DES VERFAHRENS SOWIE PULVERZUBEREITUNG ZUR DURCHFÜHRUNG DES VERFAHRENS**

POWDER-COATING PROCESS, A DEVICE FOR CARRYING OUT THE PROCESS AND A COATING POWDER FOR USE IN THE PROCESS

PROCEDE PERMETTANT DE REALISER UN REVETEMENT PULVERULENT, DISPOSITIF DE MISE EN OEUVRE DUDIT PROCEDE ET PREPARATION DE POUDRE A UTILISER POUR METTRE LEDIT PROCEDE EN OEUVRE

(84) Benannte Vertragsstaaten:
**AT BE CH DE DK ES FR GB IT LI NL SE**

(30) Priorität: **06.11.1992 DE 4237594**

(43) Veröffentlichungstag der Anmeldung:
**16.08.1995 Patentblatt 1995/33**

(73) Patentinhaber: **BASF Lacke + Farben AG 48165 Münster-Hiltrup (DE)**

(72) Erfinder:
- **MOLERUS, Otto, Prof. Dr.**
  **D-91334 Hemhofen (DE)**
- **WIRTH, Karl-Ernst, Prof. Dr.**
  **D-91230 Happurg (DE)**
- **HILGER, Christopher, Dr.**
  **D-48151 Münster (DE)**
- **WOLTERING, Joachim, Dr.**
  **D-48151 Münster (DE)**
- **WONNEMANN, Heinrich, Dr.**
  **D-48291 Telgte (DE)**

(56) Entgegenhaltungen:
**EP-A- 0 421 796**

- **DERWENT ACCESSION, Nr. 82-32 116, Questel Telesystems (WPIL), DERWENT PUBLICATIONS LTD., London & JP-A-57 044 688 (OSAKA GAS KK) 13. März 1983**

## Beschreibung

Die Erfindung betrifft die Pulverbeschichtung insbesondere von großflächigen, dünnwandigen Metallteilen und vor allem von Autokarosserien.

Für vielfältige Anwendungsgebiete werden pulverförmige Stoffe mit möglichst geringen Partikelgrößen von unter etwa 20 μm benötigt. Problematisch ist bei derartigen feinteiligen Pulvern häufig, daß diese Materialien nur schlecht handhabbar sind und insbesondere Probleme in bezug auf die Rieselfähigkeit auftreten. Problematisch ist insbesondere auch die Herstellung von Beschichtungen unter Verwendung dieser feinteiligen Pulver. Als Beispiel für ein derartiges Anwendungsgebiet sei der Bereich der Katalysatortechnik genannt, bei dem die Wirksubstanzen noch in feine Poren der Trägerstoffe eingebracht werden müssen.

Ein weiteres wichtiges Anwendungsgebiet für feinteilige pulverförmige Stoffe stellen Pulverlacke dar, die zunehmend an Bedeutung gewinnen.

Klassische Lackierverfahren, bei denen Farbpigmentpartikel in einem herkömmlichen flüssigen Lösungsmittel dispergiert auf die zu lackierenden Teile in der Form von Lacktröpfchen aufgesprüht werden, stellen eine erhebliche Umweltbelastung wegen der, z.B. bei der Serienproduktion von Personenkraftwagen konzentriert auftretenden Abluftbelastung, dar.

Im Interesse eines besseren Umweltschutzes wurden drei Lackarten für eine umweltfreundlichere Spritz- oder Sprühlackierung (R. Laible, Umweltfreundliche Lackiersysteme für die industrielle Lackierung, Expert Verlag, Esslingen, 1988), nämlich High-Solids-Lacke, Wasserlacke und Pulverlacke, entwickelt.

High-Solids-Lacke sind im wesentlichen nichts anderes als eingedickte Normallacke, d.h. die in die Umgebungsluft austretenden Emissionen an zum Teil schädlichen Lösungsmitteln sind verringert, aber nicht beseitigt. Wasserlacke weisen den Nachteil auf, daß der Overspray im Nasser zurückgewonnen werden muß. Pulverlacke führen weder zu merklicher Luft- noch zu belastender Wasserverschmutzung. Beim gegenwärtigen Entwicklungsstand weist dieses Verfahren jedoch einige Nachteile auf, die einer breiten Anwendung, insbesondere im Bereich der dünnen Lackierung von dünnen, großflächigen Metallteilen, z.B. von Karosserien, entgegenstehen.

Das Prinzip der seit 1965 eingeführten elektrostatischen Pulverlackierung ist recht einfach. Pulverlack besteht aus in Luft dispergierten Farbpulverpartikeln im Korngrößenbereich von 20 - 60 μm mit mittleren Korngrößen von 40 - 50 μm. In Luft dispergiert (fluidisiert) fließen solche Pulverlackpartikeln wie eine Flüssigkeit. Diese Eigenschaft begründet ihre Verwendbarkeit beim Farbsprühen bzw. -spritzen. Sie werden in speziellen elektrostatischen Sprühpistolen aufgeladen und auf ein geerdetes Werkstück aufgespritzt, auf dem sie elektrostatisch haften. Am Werkstück vorbeigesprühte und nicht niedergeschlagene Pulverlackpartikeln werden abgesaugt, von der Luft getrennt, gesiebt und wiederverwendet.

Vorteilhaft an der Pulverlackierung ist daher, daß praktisch keine Umweltbelastung auftritt und eine durch trockene Absaugung und Abscheidung sehr gute Materialausnutzung erzielt werden kann, da Overspray ohne belastende Rückstände zurückgewonnen wird.

Die Anwendbarkeit dieser Pulverlacktechnologie ist jedoch auf die Auftragung dickerer Lackschichten von mindestens 70 μm begrenzt, weil die Lackschicht, um eine glatte Oberfläche aufzuweisen, wenigstens etwa 70 μm dick sein muß und sich feinere Partikeln mit diesem Verfahren nicht einwandfrei verarbeiten lassen.

Bekannter Pulverlack gehört einem Schüttguttyp an, der fähig ist, Luft zu halten. Er zeigt folgendes Verhalten: ein Schüttgutbett aus Materialpartikeln, für die Krack-Katalysatoren ein typisches Beispiel sind, expandiert beim Fluidisieren (Wirbelbett) merklich oberhalb der Minimalfluidisation, bevor Luftblasenbildung im Wirbelbett einsetzt. Wird die Luftzufuhr schlagartig abgestellt, so kollabiert das Bett langsam mit einer Geschwindigkeit von 0,3 - 0,6 cm/s, die der Leerrohrgeschwindigkeit in der Suspensionsphase entspricht.

Ein Schüttguttyp mit Partikeln unter etwa 20 μm, der Materialien umfaßt, die merklich kohäsiv sind, d.h. bei denen die Haftkräfte zwischen den Partikeln die möglichen anderen Kräfte im Wirbelbett, nämlich Gewicht und Strömungswiderstand, wesentlich übertreffen, läßt nur bei zusätzlichem Einsatz von z.B. mechanischen Rührern eine mehr oder weniger schlechte Fluidisation zu, aber kaum ein echtes Dispergieren der Partikeln erzwingen.

Pulverlacke haben eine Feststoffdichte von etwa 1500 kg/m$^3$. Bei Umgebungsdruck ist die Luftdichte vernachlässigbar. Nur eine Korngrößenverteilung der Pulverlacke im Bereich zwischen 20 μm und 60 μm garantiert, daß sich Pulverlacke im Gebiet der erforderlichen ausgezeichneten Fluidisationseigenschaften befinden. Diese Korngrößenbegrenzung nach unten hat daher zur Folge, daß gewisse Mindestschichtdicken nicht unterschritten werden können und daß hohe Oberflächengüte, Verlauf und Glanz erst bei Schichtdicken > 70 μm erreicht werden, also bei hohem Lackverbrauch und dicken Farbschichten.

Ein signifikant erweiterter Einsatzbereich der bekannten Pulverlacktechnologie zu qualitativ hochwertigen dünneren Lackierungen würde Pulverlackpartikeln vom ungeeigneten Schüttguttyp mit Partikeln unter etwa 20 μm erforderlich machen. Der bisherigen Pulverlacktechnologie ist der Vorstoß zu wünschenswerten geringen Korngrößenbereichen daher aus physikalischen Gründen verschlossen. Auch wichtige Anwendungsgebiete, wie z.B. die Katalysatorherstellung, bei denen die Wirksubstanz in die Poren einer Trägersubstanz eingebracht wird, sind dieser Technologie verschlossen.

Darüber hinaus ist derzeit die Pulverlacktechnologie auf einige ausgewählte Bindemittel/Härter-Systeme beschränkt, da beispielsweise reaktive Systeme der Pulverlacktechnologie nicht zugänglich sind. So ist es nicht möglich, Pulverlacke als Zweikomponenten-Systeme, bei denen der Härter und das Bindemittel getrennt gelagert und erst kurz der Applikation gemischt werden, zu formulieren. Um homogene Pulverlacke zu erhalten, sind nämlich spezielle Verfahrensschritte bei der Herstellung der Pulverlacke erforderlich. Üblicherweise wird der Pulverlack zunächst extrudiert und dann erst vermahlen, um so eine homogene Verteilung der einzelnen Bestandteile des Pulverlackes zu gewährleisten. Dagegen ist es nicht möglich, einen Pulverlack mit homogener Verteilung der einzelnen Bestandteile durch einfaches Dispergieren herzustellen. Es ist daher nicht möglich, Pulverlacke erst beim Anwender aus einer Bindemittel- und Härterkomponente herzustellen. Pulverlacke, die bei Umgebungstemperatur reaktive Komponenten, wie z.B. OH-gruppenhaltige Bindemittel und bei Umgebungstemperatur reaktive Härter auf der Basis freier Isocyanatgruppen, enthalten, können daher nicht formuliert werden.

Ferner ist der bei den herkömmlichen Verfahren zur Herstellung von Pulverlacken erforderliche Extrusionsschritt zeit- und kostenintensiv. Außerdem kann es bei reaktiven Systemen durchaus zu Problemen bei der Extrusion kommen (Vorreaktion), die wiederum entsprechende, aufwendige Maßnahmen erfordern.

Ein weiterer Grund dafür, daß die Pulverlacktechnologie auf einige ausgewählte Bindemittel/Härter-Systeme beschränkt ist, liegt darin, daß die Pulverlacke derzeit Glasübergangstemperaturen Tg von > 40°C aufweisen müssen, damit die sog. Blockfestigkeit der Pulverlacke gewährleistet ist. Die Pulverlacke sind nämlich i.a. nur dann bei Umgebungstemperatur (i.a. 25°C) lagerfähig und bleiben rieselfähig, wenn die Glasübergangstemperatur der Pulverlacke oberhalb der Umgebungtemperatur liegt.

Aus der EP-A-421796 ist ein Verfahren und eine Vorrichtung für die Sprühapplikation von flüssigen Beschichtungsmitteln, die überkritisches oder verflüssigtes Gas enthalten, bekannt. Hierbei ist es erfindungswesentlich, daß eine speziell konstruierte Sprühdüse eingesetzt wird, um beispielsweise Verluste des überkritischen oder verflüssigten Gases zu vermeiden.

Der Erfindung liegt ausgehend von der Tatsache, daß die Pulverlackierung das einzige echt umweltfreundliche Lackierverfahren darstellt und angesichts der zuvor beschriebenen Limitierung der gegenwärtigen Pulverlackierungstechnologie das technische Problem zugrunde, den Anwendungsbereich der Pulverlacktechnologie zu erweitern. so sollten auch dünnere Lackierungen höchster Oberflächengüte und Deckkraft mit einwandfreiem Verlauf und Glanz erzeugt werden können, ohne daß eine neuartige Umweltbelastung entsteht. Ferner sollten Pulverlacke mit einer erweiterten Bindemittel/Härter-Basis zur Verfügung gestellt werden. Insbesondere sollte die Formulierung von Pulverlacken auf der Basis reaktiver Systeme, d.h. bereits bei Umgebungstemperatur reaktiver Bindemittel/Härter-Systeme, ermöglicht werden. Schließlich sollten der Pulverlacktechnologie völlig neue Anwendungsgebiete erschlossen werden, wie z, B. der Bereich der Katalysatorherstellung.

Ein dieses Problem lösendes Verfahren ist mit seinen Ausgestaltungen in den Patentansprüchen gekennzeichnet. Ebenfalls ist ein Mahlverfahren für die Erzeugung des erfindungsgemäß einzusetzenden Pulvers und eine für das Pulverbeschichtungsverfahren geeignete Pulversuspension in den Patentansprüchen angegeben.

Schließlich betrifft die Erfindung die Anwendung dieses Verfahrens zur Herstellung von Katalysatoren.

Es ist überraschend und war nicht vorhersehbar, daß die Suspendierung verschiedener feinteiliger Materialien in unter einem Druck von maximal 20 bar verflüssigtem Gas zu problemlos handhabbaren Suspensionen führt, die auf den unterschiedlichsten Gebieten einsetzbar sind. So ist die erfindungsgemäße Suspendierung in dem bei einem Druck von maximal 20 bar verflüssigten Gas für alle Materialien vorteilhaft einsetzbar, die sich in dem verflüssigten Gas leicht suspendieren lassen.

Zur Herstellung der erfindungsgemäß eingesetzten Suspensionen sind alle verflüssigten Gase geeignet, die bei einem Druck von maximal 20 bar, bevorzugt maximal 10 bar und besonders bevorzugt bei normalem Umgebungsdruck verflüssigt worden sind, indem sie nach dem Fachmann bekannten Methoden auf die entsprechend tiefen Temperaturen abgekühlt worden sind. Als Beispiele für geeignete verflüssigte Gase seien flüssiger Stickstoff, flüssige Luft und flüssiges Helium genannt. Aufgrund der guten Verfügbarkeit und des niedrigen Preises wird insbesonderer flüssiger Stickstoff eingesetzt, wobei je nach Anwendungszweck der Suspensionen aber auch andere verflüssigte Gase zum Einsatz kommen.

Die Verwendung von Gas, das bei einem Druck von maximal 20 bar verflüssigt wurde, ist gewährleistet, daß die Suspension ohne aufwendige Vorrichtungen zur Aufrechterhaltung hoher Drucke gehandhabt werden kann, während die Verwendung überkritischer Gase, wie z. B. von verflüssigtem $CO_2$, die Aufrechterhaltung hoher Drucke bei der Herstellung, Lagerung, Transport und Verarbeitung der Suspensionen erfordert. Die Verwendung von Gasen, die bei einem Druck von maximal 20 bar verflüssigt worden sind, schließt aber selbstverständlich nicht aus, daß die erfindungsgemäß eingesetzte Suspension einem erhöhten Druck, beispielsweise beim Transport in einer Ringleitung, ausgesetzt wird, nur ist eben ein solcher Druck nicht zur Aufrechterhaltung der Suspension erforderlich.

Aufgrund der mit der Verwendung von bei einem Druck von maximal 20 bar verflüssigtem Gas verbundenen tiefen Temperaturen (z. B. -196°C für flüssigen Stickstoff bei Umgebungsdruck) eignen sich die erfindungsgemäßen Suspensionen insbesondere für Materialien, die bei Umgebungstemperatur reaktiv sind und deshalb normalerweise nicht gelagert/transportiert und u. U. nicht einmal verarbeitet werden können.

Ferner können derartige Suspensionen in verflüssigtem Gas vorteilhafterweise für die Herstellung von Katalysatoren, insbesondere von metallorganischen Katalysatoren, eingesetzt werden. Hierbei wird die Wirksubstanz in dem verflüssigten Gas suspendiert, dann in die Poren der Trägersubstanz eingebracht und anschließend das verflüssigte Gas verdampft. Man erhält so Katalysatoren, bei denen die Wirksubstanz gleichmäßig in den Poren der Trägersubstanz abgeschieden ist. Wie im Bereich der Herstellung der Katalysatoren üblich, ist auch in diesem Fall selbstverständlich das sogenannte Ausbluteverhalten zu prüfen, d.h. zu überprüfen, daß die Wirksubstanz auch bei den Reaktionstemperaturen, bei den der Katalysator verwendet wird, in den Poren der Trägersubstanz verbleibt.

Das Wesen der Erfindung besteht darin, daß eine Suspension aus Pulverpartikeln, die auch erheblich feiner als zuvor sein können, in niedrig viskosem verflüssigtem Gas eingesetzt wird und diese Suspension oder zumindest der Flüssiggasanteil beim, vor oder nach dem Versprühen soweit erhitzt wird, daß eine zum Verdampfen des verflüssigten Gases beim Versprühen ausreichende Energie- bzw. Wärmemenge zur Verfügung steht. Es wird auf diese Weise eine fließfähige und versprühbare stabile Pulversuspensionen, insbesondere Pulverlacksuspension, die sehr gut lager- und transportierbar ist und zu hochglänzenden dünnen Beschichtungen verspritzt werden kann, zur Verfügung gestellt.

Im folgenden wird nun die Erfindung beispielhaft anhand des Verfahrens der Pulverlackierung näher beschrieben. Selbstverständlich können auch andere Beschichtungen, beispielsweise zur Herstellung von Katalysatoren, mit Hilfe dieses Verfahrens hergestellt werden. Dies gilt insbesondere für alle Gebiete, auf denen es wesentlich ist, Beschichtungen mit einer möglichst geringen Schichtdicke unter Verwendung von Pulvern mit einer mittleren Teilchengröße < 15 μm, bevorzugt < 10 μm, herzustellen.Als Beispiele seien die Gebiete der Beschichtung mit Metallen oder Klebstoffen, die Dotierung von Oberflächen, die Legierungsherstellung, die Folienbeschichtung (Antistatikausrüstung), die Keramikbeschichtung und die Beschichtung von strukturierten Körpern, Fasern oder Vliesen genannt.

Die Bereitstellung der Pulverlacksuspension kann in gut isolierten Vorrats- bzw. Rührgefäßen erfolgen, die vorteilhaft zur Beibehaltung einer guten Wärmeisolierung einen Rührer mit Magnetantrieb zur wiederholten Suspendierung aufweisen. Um mit beim Verarbeiten abnehmendem Flüssigkeitsstand immer einen Vordruck von z.B. 5 bar an den Lackierdüsen aufrechtzuerhalten, ist das Rührgefäß außer mit einer Heizung auch mit einer Kühlung versehen. Beide sind an eine Regeleinrichtung angeschlossen.

Die Pulverlackverarbeitung erfolgt in an sich bekannter Weise derart, daß das Vorrats- bzw. Rührgefäß entweder unmittelbar oder über eine gut wärmeisolierte Ringleitung an eine oder mehrere Sprühpistolen angeschlossen ist, wobei im letzteren Fall die Umwälzung der Suspension über eine Umwälzpumpe erfolgen kann.

An das Rührgefäß oder die Ringleitung sind in an sich bekannter Weise beispielsweise Zwei- oder Mehrstoffdüsen zur Zerstäubung der Suspension angeschlossen. Beim bisherigen Flüssiglackieren von beispielsweise Autokarosserien sind etwa 20 Sprühdüsen vorgesehen. Bei einer Lackierzeit von 1 Minute pro Karosserie entfällt dann auf eine Düse ein erforderlicher Durchsatz von 100 g/min Pulverlack. Bei einer Pulverlackdichte von 1500 kg/m$^3$ ergibt sich ein Pulverlackvolumenstrom von $v_p$ = 0,067 1/min. Eine Suspension mit 25 % Volumenanteil Feststoff läßt sich nach aller Erfahrung sehr gut fördern. Eine mittlere Korngröße des Pulverlackes von 5 μm beugt bei Überschreiten von gewissen Mindesttransportgeschwindigkeiten einem Aussedimentieren des Feststoffes vor. Pro Zerstäuberdüse ist also ein Suspensionsvolumenstrom von

$$V_{sus} = \frac{0,067 \times 60}{0,25} = 16 \text{ l/h}$$

zu verarbeiten. Derartige Zerstäubungsleistungen können von handelsüblichen Zweistoffdüsen für das Farbspritzen einwandfrei erbracht werden. Spezielle Zweistoff-Sprühpistolen sind daher nicht erforderlich. Bei einem Düsenvordruck von etwa 4 bar sowohl auf der Flüssigseite wie auch auf der Gasseite wären mit zu zerstäubendem Wasser Tropfengrößen von 30 μm erreichbar. Die im Vergleich zu Wasser vorhandene deutlich niedrigere Viskosität wie auch Oberflächenspannung eines in der Nähe des Siedepunktes befindlichen Inertgases, insbes. Stickstoffs, lassen im Vergleich zu Wasser kleinere Tröpfchengrößen entstehen. Eine Zweistoffdüse mit den zuvor genannten Betriebsdaten benötigt für die Zerstäubung eines Volumenstroms Suspension $v_{sus}$ = 16 l/h eine Gasmenge von $v_g$ = 170 l/min. Wird beim Lackverarbeiter hierzu erhitzte, trockene Luft von 4 bar eingesetzt, so kann die Zweistoffdüse nach dem aus der Kraftwerkstechnik bekannten Prinzip der Einspritzkühlung betrieben werden, d.h. die Zweistoffdüse kann mit derart erhitzter Zerstäuberluft betrieben werden, daß die zugeführte Wärmemenge zum praktisch schlagartigen Verdampfen der feststoffhaltigen Stickstofftröpfchen ausreicht.

Um flüssigen Stickstoff (-196°C) zu verdampfen und auf Umgebungstemperatur (25 °C) zu erhitzen, ist pro Düse eine Wärmezufuhr von 1,2 kW erforderlich. Diese Wärmemenge kann in der Weise zugeführt werden, daß die zur Zerstäubung erforderliche Gasmenge auf ca. 150 °C vorgewärmt wird. Die Düse verläßt dann eine PulverlackGas-Strömung mit einer Temperatur von 25 °C. Je nach gewünschter Temperatur der Pulverlack-Gas-Strömung kann das zur Zerstäubung eingesetzte Gas auch auf andere Temperaturen aufgeheizt sein. Entscheidend ist aber jeweils die durch das Gas eingebrachte Wärmemenge, die neben der Temperatur des Zerstäubungsgases auch von der jeweiligen Gasmenge abängt. Jeweils günstige Temperaturen und Gasmengen hängen dabei auch noch vom jeweiligen Pulverlack ab und können anhand weniger Routineversuche ermittelt werden.

Daneben kann es aber auch vorteilhaft sein, die Zweistoffdüse nicht mit erhitzter, sondern mit gekühlter Zerstäuberluft zu betreiben, insbesondere bei Verarbeitung von bei Umgebungstemperatur reaktiven Pulvern. So ist es auch möglich, die zur Verdampfung des flüssigen Stickstoffs und Aufheizen auf Umgebungstemperatur erforderliche Wärmemenge nicht nur duch Zuführung eines erwärmten Zerstäubergases zuzuführen. Diese Wärmemenge kann selbstverständlich auch teilweise oder vollständig durch andere Methoden, beispielsweise Strahlungsheizung, zugeführt werden.

Bei der Durchführung des erfindungsgemäßen Verfahrens ist ferner darauf zu achten, daß der Taupunkt der Umgebung nicht erreicht wird, um so Eiskristallbildungen zu vermeiden. Dies kann durch entsprechndes Aufheizen, z. B. auf 25°C, geschehen, wie dies oben beschrieben ist. Bevorzugt wird jedoch das erfindungsgemäße Beschichtungsverfahren in einer trocknen Atmosphäre (d.h. in einer Atmosphäre mit einer möglichst geringen Luftfeuchtigkeit) durchgeführt. Wenn mit Pulversuspensionen in flüssigem Stickstoff gearbeitet wird, erfolgt vorteilhafterweise die Pulverapplikation in einer Stickstoffatmosphäre (insbesondere geschlossener Kreislauf).

Außer mit der obenbeschriebenen handelsüblichen Zweistoffdüse kann die erfindungsgemäße Pulverlacksuspension auch mittels einer handelsüblichen Airlessdüse appliziert werden. In diesem Fall ist, ebenso wie bei Einsatz der Zweistoffdüse unter Verwendung von gekühlter Zerstäuberluft, durch entsprechende Vorrichtungen zu gewährleisten, daß der flüssige Stickstoff verdampft und auf Umgebungstemperaturen aufgeheizt wird. Die hierzu erforderliche Wärmemenge kann beispielsweise mittels Strahlungsheizung, mittels eines aufgeheizten Gasstromes außerhalb der Düse o.ä. erfolgen.

Bei einer Pulverlackdichte von ca. 1500 kg/m$^3$ und einer Pulver/Flüssigstickstoff Suspension mit einem Volumenanteil von 25 % Feststoff sind pro kg Pulverlack 2 l Flüssigstickstoff aufzuwenden. Bei einem Großabnehmer Literpreis von 0,5 DM/l flüssigen Stickstoffs wird das Lackierverfahren pro kg Pulverlack mit zusätzlich 1,00 DM belastet, bei einem Pulverlackpreis von ca. 8,00 DM/kg also mit einer Einsatzstoffpreissteigerung von ca. 13 %.

Das neue Pulverlackierverfahren läßt den Einsatz bekannter und erprobter Bausteine zu. Die Verfahrenskette gliedert sich in drei Teilschritte: Lackherstellung, Lagerung und Transport, Lackverarbeitung.

Die Herstellung des Pulverlacks geht aus von bekannten Pulverlackpartikeln, beispielsweise mit einer mittleren Korngröße von etwa 40 - 50 µm. Es können aber auch Pulverlacke mit deutlich größeren mittleren Korngrößen eingesetzt werden. Aus einem Vorratsgefäß wird dieses Pulver taktweise in ein Mischgefäß eingelassen und anschließend in dem flüssigen Gas, bevorzugt in flüssigem Stickstoff, suspendiert. Wie festgestellt wurde, lassen sich Pulverlackpartikeln mit einer mittleren Korngröße von 50 µm problemlos in flüssigem Stickstoff dispergieren. Farbpulver mit einer mittleren Partikelgröße von etwa 50 µm wird daher mit flüssigem Stickstoff in einem Mischer zu einer Suspension vermischt und anschließend auf die gewünschte Teilchengröße feingemahlen. Wie gesagt, können aber auch Pulverlacke mit einer deutlich größeren Teilchengröße suspendiert und anschließend auf die gewünschte Teilchengröße vermahlen werden.

Da sich der flüssige Stickstoff in der Nähe des Siedepunktes von -196 °C befindet, ist dessen Viskosität mit 8,9.10$^{-5}$ Ns/m$^2$ (vergl. Wasser 1.10$^{-3}$ Ns/m$^2$) außerordentlich niedrig. Beim Einsatz von Rührwerkskugelmühlen, zur Feinmahlung, z.B. der Firmen Draiswerke oder Netzsch, soll die Suspensionsviskosität 10 Pas nicht überschreiten. Wegen der niedrigen Viskosität von flüssigem Stickstoff läßt sich so eine vergleichsweise hochkonzentrierte Suspension einsetzen. Die Mahlung erfolgt solange, bis die mittlere Korngröße kleiner 15 µm, bevorzugt 5 bis 10 µm, beträgt. Die so ermahlene, aus mittlerer Korngröße von kleiner als 15 µm, bevorzugt von 5 µm bis 10 µm Partikeln, und flüssigem Stickstoff bestehende Suspension wird dann auf gut wärmeisolierte Transportgefäße abgefüllt, die gleichzeitig die Suspendier- bzw. Rührgefäße beim Lackverarbeiter für die erneute Dispergierung sind und in denen auch die Pulverlacksuspension problemlos gelagert werden kann.

Daneben kann die Herstellung der Pulverlacke dadurch erfolgen, daß zunächst die Teilchengröße der Pulverlacke (Korngrößenverteilung) unter Verwendung entsprechender Mahlaggregate, ggf. in Kombination mit geeigneten Sicht- und Siebvorrichtungen, auf die gewünschten Werte eingestellt wird. Für die Herstellung von Pulverlacken mit einer kleinen mittleren Teilchengrößen von < 15 µm können beispielsweise Fließbettstrahlmühlen (AFG) der Firma Alpine, Augsburg, ggf. in Kombination mit Turboplex-Feinstsichtern der Firma Alpine, Augsburg, eingesetzt werden. Diese Pulverlacke mit der gewünschten Korngrößenverteilung werden dann anschließend unter Verwendung entsprechender Mischer oder Dispergieraggregate in dem flüssigen Gas, bevorzugt in flüssigem Stickstoff, suspendiert.

Vorteilhaft ist hierbei beispielsweise, daß das Bindemittel und der Härter getrennt vermahlen werden können und die so erhaltenen feinen Teilchen direkt in dem flüssigen Gas, insbesondere in flüssigem Stickstoff, suspendiert werden können. Hierdurch wird die Herstellung von Pulverlacken ohne Extrusionsschritt ermöglicht.

Da die Suspendierung der fein gemahlenen Partikeln in dem flüssigen Gas mittels einfacher Misch- bzw. Dispergieraggregate durchführbar ist, ist es sogar möglich, die Pulverlacksuspension erst kurz vor der Applikation beim jeweiligen Anwender herzustellen. Hierdurch können einerseits reaktive Systeme zum Einsatz gelangen, da diese Variante die Formulierung von Pulverlacken als Zweikomponenten-Systeme ermöglicht. Andererseits ist eine wesentliche größere Variationsbreite, beispielsweise hinsichtlich verschiedener Farbtöne gegeben, da auch die Pigmente in entsprechend fein vermahlener Form erst vor Ort dem Pulverlack bei der Herstellung der Suspension zugesetzt werden können. Ebenso können viele anwendungstechnische Eigenschaften der Pulverlacke durch entsprechende Additivzusätze gesteuert werden. Da zur homogenen Einarbeitung dieser Additive kein Extrusionsschnitt erforderlich ist, können die Pulverlacke praktisch nach dem Baukasten-Prinzip hergestellt werden. Dies bedeutet, daß jeder Anwender den für seinen Zweck optimalen Pulverlack dadurch herstellen kann, daß die einzelnen Bestandteile (Bindemittel, Härter, Pigmente, Additive usw.) in fein vermahlener Form angeliefert und erst vor Ort durch Suspendierung in flüssigem Gas zum Pulverlack verarbeitet werden können. Auch jeweils kleinere Mengen eines speziellen Pulverlacks können so kostengünstig hergestellt werden. Ferner können bei dem erfindungsmäßigen Verfahren auch flüssige Komponenten (Härter, Additive usw.) problemlos in den Pulverlack eingearbeitet werden.

Da sich der Pulverlack aufgrund der niedrigen Viskosität (und der niedrigen Oberflächenspannung) des verflüssigten Gases (insbesondere in der Nähe des Siedepunktes des verflüssigten Gases) sehr einfach suspendieren läßt,ist es außerdem auch möglich, die Suspension erst in der Düse herzustellen. Bei der Airless-Applikation kann dies mit Hilfe einer handelsüblichen Zweistoffdüse erfolgen. Wenn unter Verwendung von Zerstäuberluft gearbeitet wird, erfolgt die Verarbeitung entsprechend mittels einer ebenfalls bekannten, handelsüblichen Dreistoffdüse.

Je nach System ist es aber u.U. durchaus wünschenswert, die Pulverlacksuspension nicht erst beim jeweiligen Anwender, sondern direkt nach der Herstellung der Pulverlackbestandteile herzustellen. Lagerung und Transport der neuen Pulverlacksuspension erfolgen dann zweckmäßig in den isolierten Transportgefäßen, die gleichzeitig beim Lackverarbeiter als Vorrats- und Rührgefäße dienen. Mit dieser Art von Lagerung und Transport werden nämlich gleichzeitig Probleme bei der bisherigen Handhabung von Pulverlacken gelöst:

Pulverlacke enthalten reaktive Komponenten, die bei längerer Lagerungsdauer bei Umgebungstemperaturen zu einer Alterung des Lackes führen. Aufgrund der tiefen Temperatur der Pulverlacksuspension (ca. -196 °C) tritt aber eine derartige Reaktion nicht ein. So können sogar Pulverlacke formuliert werden, die Komponenten enthalten, die bei Raumtemperatur (etwa 25 °C) direkt abreagieren würden, wie beispielsweise Pulverlacke auf der Basis hydroxylgruppenhaltiger Bindemittel und Reaktivvernetzern mit freien Isocyanatgruppen. Ferner können empfindliche Inhaltsstoffe, wie z.B. Alubronzen, ohne aufwendige Schutzbehandlung problemlos in den Pulverlack eingearbeitet werden. Hierdurch wird die Pulverlacktechnologie auf weitere bisher nicht zugängliche Bindemittel/Härter-Systeme ausgedehnt.

Darüber hinaus verfestigen bekannte Pulverlacke bei längerem Transport, insbes. Schiffstransport, derart, daß ihre Redispergierung praktisch unmöglich wird. Mit der hier vorgeschlagenen Herstellung und Lagerung des Pulverlacks ist es prinzipiell möglich, von einer Lackproduktionsstätte weltweit Lackverarbeiter zu versorgen. Da sogar für sehr große Lagermengen, z.B. verflüssigtes Erdgas, eine Tiefkühlkette aufgebaut werden konnte, ist dies für die wesentlich kleineren Pulverlacksuspensionsmengen, z.B. in der Gestalt geeignet ausgelegter isolierter Transportbehälter, sogenannter Isoliergefäße, ebenfalls möglich.

Schließlich ermöglicht das erfindungsgemäße Verfahren auch den Einsatz von Pulverlacken, die deutlich erniedrigte Glasübergangstemperaturen Tg aufweisen. Damit nämlich bei den derzeitigen Pulverlacken die dauerhafte Rieselfähigkeit erhalten bleibt, muß der Tg-Wert der Pulverlacke üblicherweise > 40 °C betragen. Bei Lagerung und Transport des Pulverlacks in flüssigem Stickstoff sind dagegen auch Pulverlacke mit deutlich niedrigeren Tg-Werten, beispielsweise < 0°C, einsetzbar. Hierdurch eröffnen sich den Pulverlacken neue Einsatzgebiete. Ferner können hierdurch die Eigenschaften der Pulverlacke für bestimmte Anwendungen verbessert werden. Beispielsweise wird der Verlauf von Pulverlacken mit sinkendem Tg-Wert deutlich verbessert, was beispielsweise für den Einsatz von Pulverlacken im Bereich der Decklackierung von Automobilkarossen von Bedeutung ist. Außerdem ist so die Formulierung von Steinschlagschutzbeschichtungen mit deutlich verbesserten Eigenschaften möglich.

Aufgrund der oben genannten, mit der Verwendung von flüssigem Gas verbundenen Vorteile können daher beispielsweise Pulverlacke auf folgender chemischer Basis formuliert werden:

a) Bindemittel mit aktiven Wasserstoffatomen (z.B. OH-, NH- und SH-gruppenhaltige Verbindungen) kombiniert mit Verbindungen, die freie Isocyanatgruppen enthalten,

b) Carboxylgruppen oder Aminogruppen enthaltende Verbindungen kombiniert mit epoxidgruppenhaltigen Verbindungen,

c) Carbodiimid-Systeme kombiniert beispielsweise mit carboxyl- oder aminogruppenhaltigen Verbindungen,

d) aminogruppenhaltige Verbindungen kombiniert mit carbonatgruppenhaltigen Verbindungen,

e) Systeme, die nach dem Prinzip einer Michael Addition aushärten, beispielsweise Verbindungen mit einer aktivierten Doppelbindungen kombiniert mit Verbindungen mit aktivem Wasserstoff,

f) Bindemittel mit aktiven H-Atomen kombiniert mit Anhydrid-Systemen,

g) feuchtigkeitshärtende Systeme und

h) bereits üblicherweise eingesetzte Pulverlacksysteme.

Schließlich weist das erfindungsgemäße Verfahren zur Herstellung von Pulverlacken noch den Vorteil auf, daß zur Herstellung von Pulverlacken mit einer kleinen mittleren Teilchengröße der Feinstanteil, d.h. Pulverlackteilchen mit einer Teilchengröße < 10 μm, nicht abgetrennt werden muß.

Die erfindungsgemäß hergestellten Pulverlacke eignen sich zur Beschichtung einer Vielzahl von Substraten, beispielsweise Metall, Kunststoff, Holz, Glas, u.ä. Bevorzugt werden sie zur Beschichtung von Metallteilen, insbesondere von großflächigen, dünnwandigen Metallteilen und vor allem von Autokarosserien, eingesetzt.

Bevorzugt erfolgt die Applikation der Pulverlacke mittels elektrostatischer Unterstützung. Üblicherweise erfolgt die elektrostatische Aufladung der Pulverlackpartikeln dadurch, daß in der Nähe der Pulveraustrittsöffnungen an Spitzen oder scharfen Kanten der Sprühpistole hohe Gleichspannung angelegt wird. Daneben ist es aber auch möglich, die Pulverlackteilchen erst hinter der Spritzdüse elektrostatisch aufzuladen.

**Patentansprüche**

1. Pulversuspension, insbesondere Pulverlacksuspension, gekennzeichnet durch eine Suspension von Pulverteilchen in einem bei einem Druck von maximal 20 bar verflüssigten Gas, insbesondere Stickstoff.

2. Pulversuspension nach Anspruch 1, dadurch gekennzeichnet, daß sie bei Raumtemperatur reaktive Komponenten enthält.

3. Pulverlacksuspension nach Anspruch 1 oder 2, dadurch gekennzeichnet, daß sie

   a) Bindemittel mit aktiven H-Atomen kombiniert mit Verbindungen, die freie Isocyanatgruppen oder Anhydridgruppen enthalten,

   b) Carboxyl- oder Aminogruppen enthaltende Verbindungen kombiniert mit Verbindungen, die Epoxidgruppen oder Carbodiimidgruppen enthalten,

   c) Aminogruppen enthaltende Verbindungen kombiniert mit carbonatgruppenhaltigen Verbindungen,

d) Systeme, die nach dem Prinzip der Michael Addition härten oder

e) feuchtigkeitshärtende Systeme

enthält.

4. Verfahren zum Herstellen einer Pulversuspension nach einem der Ansprüche 1 bis 3, dadurch gekennzeichnet, daß eine Feinmahlung von gröberen Pulverteilchen auf eine mittlere Partikelgröße von nicht mehr als 15 μm, insbesondere 10 μm, durch Naßmahlung, insbesondere in einer Rührwerksmühle, erfolgt, wobei das flüssige Medium für die Naßvermahlung ein bei einem Druck von maximal 20 bar verflüssigtes Gas ist, insbesondere Stickstoff.

5. Verfahren zum Herstellen einer Pulversuspension nach einem der Ansprüche 1 bis 3, dadurch gekennzeichnet, daß zunächst die gewünschte Teilchengröße des Pulvers eingestellt und anschließend das Pulver in einem bei einem Druck von maximal 20 bar verflüssigten Gas suspendiert wird.

6. Verfahren zur Herstellung einer Pulverbeschichtung auf einem Substrat, wobei eine Suspension von Pulverteilchen, insbesondere Pulverlackteilchen, versprüht und der Sprühstrahl auf das zu beschichtende Substrat gerichtet wird, dadurch gekennzeichnet, daß eine Pulversuspension nach einem der Ansprüche 1 bis 3 eingesetzt wird und das flüssige Gas vor, bei oder nach dem Versprühen der Suspension verdampft wird.

7. Verfahren nach Anspruch 6, dadurch gekennzeichnet, daß das zur Suspendierung der Pulverteilchen eingesetzte verflüssigte Gas unter einem Druck von maximal 10 bar, bevorzugt bei normalem Umgebungsdruck, verflüssigt worden ist.

8. Verfahren nach Anspruch 6, dadurch gekennzeichnet, daß die Suspension vor dem Versprühen unter Überdruck indirekt beheizt wird.

9. Verfahren nach Anspruch 6, dadurch gekennzeichnet, daß die Flüssiggastropfen direkt durch Strahlungsheizung und/oder durch Vermischung der Suspension mit einem aufgeheizten Gasstrom beim Versprühen verdampft werden.

10. Verfahren nach Anspruch 9, dadurch gekennzeichnet, daß die Vermischung der Suspension und des aufgeheizten Gasstroms in einer Zweistoffdüse erfolgt.

11. Verfahren nach Anspruch 9, dadurch gekennzeichnet, daß die Suspension in einer Zweistoffdüse versprüht wird und der Gasstrom eine Temperatur hat, die nur geringfügig oberhalb der Suspensionstemperatur liegt, und daß die Verdampfung der Flüssiggastropfen durch einen aufgeheizten zweiten Gasstrom erfolgt.

12. Verfahren nach Anspruch 10 oder 11, dadurch gekennzeichnet, daß die Einstellung des Vordruckes der Suspension an der Zweistoffdüse durch geregeltes Heizen oder Kühlen eines isolierten Suspensions-Vorratsgefässes erfolgt, aus dem die Suspension der Zweistoffdüse zugeführt wird.

13. Verfahren nach einem der Ansprüche 6 bis 12, dadurch gekennzeichnet, daß Lagerung und Transport zwischen Pulverhersteller und Verarbeiter in isolierten Transportgefäßen erfolgt, welche die zum späteren Versprühen benutzte Pulversuspension aus verflüssigtem Gas und Pulverteilchen enthalten.

14. Verfahren nach Anspruch 6, dadurch gekennzeichnet, daß die Suspension der Pulverteilchen in dem verflüssigten Gas erst in der Düse hergestellt wird und die Flüssiggastropfen a) indirekt und/oder b) direkt durch Strahlungsheizung und ggf. c) durch Vermischung der Suspension in der Düse mit einem gekühlten Gasstrom beim Versprühen und/oder d) durch einen aufgeheizten Gasstrom nach dem Versprühen verdampft werden.

15. Verfahren nach einem der Ansprüche 6 bis 14, dadurch gekennzeichnet, daß die Pulverteilchen eine mittlere Korngröße von nicht mehr als 15 μm haben.

16. Verfahren nach Anspruch 15, dadurch gekennzeichnet, daß die Pulverteilchen eine mittlere Korngröße von nicht mehr als 10 μm und eine maximale Korngröße von nicht mehr als 20 μm haben.

17. Verfahren nach einem der Ansprüche 6 bis 16, dadurch gekennzeichnet, daß die Viskosität des verflüssigten Gases $< 5.10^{-4}$ Ns/m$^2$, bevorzugt $< 10^{-4}$ Ns/m$^2$ beträgt.

18. Verfahren nach einem der Ansprüche 6 bis 17, dadurch gekennzeichnet, daß die Pulverlackteilchen elektrostatisch aufgeladen auf ein geerdetes Metallteil gerichtet werden.

19. Verfahren nach einem der Ansprüche 6 bis 18, dadurch gekennzeichnet, daß es zur Herstellung von Katalysatoren eingesetzt wird.

20. Vorrichtung zur Durchführung des Verfahrens nach einem der Ansprüche 6 bis 19, mit einem isolierten Vorratsbehälter, der eine Pulversuspension nach einem der Ansprüche 1 bis 3 enthält, mit einer Sprühdüse und einer wärmeisolierten Leitung, die den Vorratsbehälter mit der Sprühdose verbindet, und mit einer Vorrichtung zur Zuführung der zur Verdampfung der Flüssiggastropfen erforderlichen Wärmemenge.

21. Vorrichtung zur Durchführung des Verfahrens nach einem der Ansprüche 6 bis 19, mit einem Pulvervorratsbehälter, der Pulverteilchen enthält, mit einer Sprühdüse und einer Leitung, die den Vorratsbehälter mit der Sprühdüse verbindet, wobei in der Düse durch Zumischen verflüssigten Gases eine Pulversuspension nach einem der Ansprüche 1 bis 3 hergestellt wird, und mit einer Vorrichtung zur Zuführung der zur Verdampfung der Flüssiggastropfen erforderlichen Wärmemenge.

## Claims

1. Powder suspension, in particular powder coating suspension, characterized by a suspension of powder particles in a gas, in particular nitrogen, liquefied at a pressure of not more than 20 bar.

2. Powder suspension according to Claim 1, characterized in that it contains components which are reactive at room temperature.

3. Powder coating suspension according to Claim 1 or 2, characterized in that it contains

   a) binders containing active H atoms, in combination with compounds which contain free isocyanate groups or anhydride groups,
   b) compounds containing carboxyl or amino groups, in combination with compounds which contain epoxide groups or carbodiimide groups,
   c) compounds containing amino groups, in combination with compounds containing carbonate groups,
   d) systems which cure by the principle of Michael addition or
   e) moisture-curing systems.

4. Process for the preparation of a powder suspension according to one of Claims 1 to 3, characterized in that a fine grinding of relatively coarse powder particles is carried out to an average particle size of not more than 15 μm, in particular 10 μm, by wet grinding, in particular in a stirred mill, the liquid medium for the wet grinding being a gas, in particular nitrogen, liquefied at a pressure of not more than 20 bar.

5. Process for the preparation of a powder suspension according to one of Claims 1 to 3, characterized in that first of all the desired particle size of the powder is adjusted and subsequently the powder is suspended in a gas liquefied at a pressure of not more than 20 bar.

**6.** Process for the production of a powder coating on a substrate, wherein a suspension of powder particles, in particular powder coating particles, is sprayed and the spray jet is directed onto the substrate to be coated, characterized in that a powder suspension according to one of Claims 1 to 3 is employed, and the liquid gas is vaporized before, during or after the spraying of the suspension.

**7.** Process according to Claim 6, characterized in that the liquefied gas employed for the suspension of the powder particles has been liquefied under a pressure of not more than 10 bar, preferably at normal atmospheric pressure.

**8.** Process according to Claim 6, characterized in that the suspension is heated indirectly prior to spraying at superatmospheric pressure.

**9.** Process according to Claim 6, characterized in that the liquid gas drops are vaporized directly by radiant heating and/or by mixing the suspension with a heated stream of gas during spraying.

**10.** Process according to Claim 9, characterized in that the suspension and the heated stream of gas are mixed in a two-fluid nozzle.

**11.** Process according to Claim 9, characterized in that the suspension is sprayed in a two-fluid nozzle and the stream of gas has a temperature which is only slightly above the temperature of the suspension, and in that the liquid gas drops are vaporized by a second heated stream of gas.

**12.** Process according to Claim 10 or 11, characterized in that the adjustment of the admission pressure of the suspension at the two-fluid nozzle is carried out by controlled heating or cooling of an insulated suspension supply vessel, from which the suspension is supplied to the two-fluid nozzle.

**13.** Process according to one of Claims 6 to 12, characterized in that storage and transportation between the powder manufacturer and the processor is effected in insulated transportation vessels which contain the powder suspension which is used for the subsequent spraying and which comprises liquefied gas and powder particles.

**14.** Process according to Claim 6, characterized in that the suspension of the powder particles in the liquefied gas is prepared in the actual nozzle and the liquid gas drops are vaporized a) indirectly and/or b) directly by radiant heating and, if desired, c) by mixing the suspension in the nozzle with a cooled stream of gas during spraying and/or d) by a heated stream of gas after spraying.

**15.** Process according to one of Claims 6 to 14, characterized in that the powder particles have an average particle size of not more than 15 µm.

**16.** Process according to Claim 15, characterized in that the powder particles have an average particle size of not more than 10 µm and a maximum particle size of not more than 20 µm.

**17.** Process according to one of Claims 6 to 16, characterized in that the viscosity of the liquefied gas is $< 5.10^{-4}$ Ns/m$^2$, preferably $< 10^{-4}$ Ns/m$^2$.

**18.** Process according to one of Claims 6 to 17, characterized in that the powder coating particles, electrostatically charged, are directed onto an earthed metal component.

**19.** Process according to one of Claims 6 to 18, characterized in that it is employed for the production of catalysts.

**20.** Apparatus for carrying out the process according to one of Claims 6 to 19, having an insulated supply container which contains a powder suspension according to one of Claims 1 to 3, having a spray nozzle and a thermally insulated line which connects the supply container to the spray can [sic], and having an apparatus for supplying the quantity of heat which is required for the vaporization of the liquid gas drops.

**21.** Apparatus for carrying out the process according to one of Claims 6 to 19, having a powder supply container which contains powder particles, having a spray nozzle and a line which connects the supply container to the spray nozzle, a powder suspension according to one of Claims 1 to 3 being prepared in the nozzle by admixing liquefied gas, and having an apparatus for supplying the quantity of heat which is required for the vaporization of the liquid gas drops.

**Revendications**

**1.** Suspension pulvérulente, en particulier suspension de laque en poudre, caractérisée par une suspension de particules de poudre dans un gaz liquéfié à une pression d'au maximum 20 bar, en particulier dans de l'azote.

**2.** Suspension pulvérulente selon la revendication 1, caractérisée en ce qu'elle contient des composants réactifs à température ambiante.

**3.** Suspension de laque en poudre selon la revendication 1 ou 2, caractérisée en ce qu'elle contient

a) des liants à atomes H actifs, combinés à des composés, qui contiennent des groupements isocyanates ou des groupements anhydrides libres,

b) des composés contenant des groupements carboxyles ou amino, combinés à des composés, qui contiennent des groupements époxydes ou des groupements carbodiimides,

c) des composés contenant des groupements amino, combinés à des composés contenant des groupements carbonates,

d) des systèmes, qui durcissent conformément au principe de l'addition de Michael ou

e) des système durcissant à l'humidité.

4. Procédé de fabrication d'une suspension pulvérulente selon l'une quelconque des revendications 1 à 3, caractérisé en ce que se produit une mouture fine de particules de poudre grossières à une grandeur moyenne de particule de moins de 15 microns, en particulier de 10 microns, par mouture par voie humide, en particulier dans un broyeur-agitateur, le milieu liquide pour la mouture par voie humide étant un gaz liquéfié sous une pression d'au maximum 20 bar, en particulier de l'azote.

5. Procédé de fabrication d'une suspension pulvérulente selon l'une quelconque des revendications 1 à 3, caractérisé en ce que l'on ajuste tout d'abord la grandeur de particule souhaitée de la poudre et que l'on procède ensuite à la suspension de la poudre dans un gaz liquéfié sous une pression d'au maximum 20 bar.

6. Procédé de fabrication d'un revêtement pulvérulent sur un substrat, une suspension de particules de poudre, en particulier de particules de laque en poudre étant pulvérisée et le jet de pulvérisation étant dirigé sur le substrat à revêtir, caractérisé en ce que l'on utilise une suspension pulvérulente selon l'une quelconque des revendications 1 à 3 et que l'on procède à la vaporisation du gaz liquide, au cours ou après la pulvérisation de la suspension.

7. Procédé selon la revendication 6, caractérisé en ce que le gaz liquéfié utilisé en vue de la mise en suspension des particules de poudre a été liquéfié sous une pression d'au maximum 10 bar, de préférence à la pression ambiante normale.

8. Procédé selon la revendication 6, caractérisé en ce que la suspension est chauffée de manière indirecte sous surpression avant la pulvérisation.

9. Procédé selon la revendication 6, caractérisé en ce que les gouttelettes de gaz liquide sont vaporisées de manière directe par chauffage rayonnant et/ou par mélange de la suspension avec un courant de gaz chauffé lors de la pulvérisation.

10. Procédé selon la revendication 9, caractérisé en ce que le mélange de la suspension et du courant de gaz chauffé se fait dans une buse à deux substances.

11. Procédé selon la revendication 9, caractérisé en ce que la suspension est pulvérisée dans une buse à deux substances et que le courant de gaz a une température qui se situe seulement faiblement au-dessus de la température de la suspension, et en ce que la vaporisation des gouttelettes de gaz liquide se fait grâce à un deuxième courant de gaz chauffé.

12. Procédé selon la revendication 10 ou 11, caractérisé en ce que le réglage de la pression d'admission de la suspension à la buse à deux substances se fait grâce au chauffage ou au refroidissement contrôlé d'un réservoir de réserve de suspension isolé, duquel la suspension est acheminée à la buse à deux substances.

13. Procédé selon l'une quelconque des revendications 6 à 12, caractérisé en ce que le stockage et le transport entre le fabricant de la poudre et l'utilisateur se font dans des récipients de transport isolés, qui contiennent la suspension pulvérulente utilisée pour la pulvérisation ultérieure, faite de gaz liquéfié et de particules de poudre.

14. Procédé selon la revendication 6, caractérisé en ce que la suspension des particules de poudre dans le gaz liquéfié n'est réalisée qu'une fois dans la buse et que les gouttelettes de gaz liquide sont vaporisées a) de manière indirecte et/ou b) de manière directe par chauffage rayonnant et, le cas échéant, c) par mélange de la suspension dans la buse avec un courant de gaz refroidi lors de la pulvérisation et/ou d) par un courant de gaz chauffé après la pulvérisation.

15. Procédé selon l'une quelconque des revendications 6 à 14, caractérisé en ce que les particules de poudre ont une grandeur moyenne de grain de moins de 15 microns.

16. Procédé selon la revendication 15, caractérisé en ce que les particules de poudre ont une grandeur moyenne de grain de moins de 10 microns, et une grandeur maximale de grain de moins de 20 microns.

17. Procédé selon l'une quelconque des revendications 6 à 16, caractérisé en ce que la viscosité du gaz liquéfié est de $< 5.10^{-4}$ $Ns/m^2$, de préférence de $< 10^{-4}$ $Ns/m^2$.

18. Procédé selon l'une quelconque des revendications 6 à 17, caractérisé en ce que les particules de laque en poudre, chargées électrostatiquement sont dirigées sur une pièce métallique mise à la terre.

19. Procédé selon l'une quelconque des revendications 6 à 18, caractérisé en ce qu'il est utilisé en vue de la préparation de catalyseurs.

20. Dispositif de mise en oeuvre du procédé selon l'une quelconque des revendications 6 à 19, avec un récipient de réserve isolé, qui contient une suspension pulvérulente conformément à l'une des revendications 1 à 3, avec une buse de pulvérisation et une conduite isolée thermiquement, qui relie le récipient de réserve avec la buse de pulvérisation et avec un dispositif en vue de la mise en oeuvre de la quantité de chaleur nécessaire à la vaporisation des gouttelettes de gaz liquide.

21. Dispositif de mise en oeuvre du procédé selon l'une quelconque des revendications 6 à 19, avec un récipient de réserve de poudre, qui contient des particules de poudre, avec une buse de pulvérisation et une conduite, qui relie le récipient de réserve avec la buse de pulvérisation, une suspension pulvérulente selon l'une quelconque des revendications 1 à 3 étant préparée dans la buse par mélange d'un gaz liquéfié, et avec un dispositif en vue de l'apport de la quantité de chaleur nécessaire à la vaporisation des gouttelettes de gaz liquide.